# EUROPÄISCHE PATENTSCHRIFT

(11) **EP 2 685 109 B1**
(45) Veröffentlichungstag und Bekanntmachung des Hinweises auf die Patenterteilung: **16.09.2015**
(21) Anmeldenummer: 13175602.5
(22) Anmeldetag: 08.07.2013
(51) Int. Cl.: F15B 13/01, F15B 11/00, F15B 21/00, B60G 17/056, B60G 17/04

(54) **Steueranordnung für ein hydropneumatisches Federungssystem sowie hydropneumatisches Federungssystem mit einer solchen Steueranordnung**
Control assembly for a hydropneumatic suspension system and hydropneumatic suspension system having such a control assembly
Agencement de commande pour un système de suspension hydropneumatique et système de suspension hydropneumatique doté d'un tel agencement de commande

(30) Priorität: 10.07.2012 DE 102012106185
(43) Veröffentlichungstag der Anmeldung: 15.01.2014
(73) Patentinhaber: FSP Fluid Systems Partners Holding AG, 6340 Baar (CH)
(72) Erfinder: Bauer, Wolfgang, 69469 Weinheim (DE)
(74) Vertreter: Hoeger, Stellrecht & Partner Patentanwälte mbB

(56) Entgegenhaltungen:
- EP-A1- 2 502 766
- EP-A2- 1 232 883
- EP-A2- 1 277 604
- DE-A1- 19 719 075
- DE-A1- 19 719 076
- US-B2- 6 578 855

## Beschreibung

Die Erfindung betrifft eine Steueranordnung für ein hydropneumatisches Federungssystem insbesondere für Fahrzeuge, wobei die Steueranordnung einen Druckversorgungsanschluss zum Anschließen an eine Druckversorgung, einen Rücklaufanschluss, einen mit dem Kolbenraum eines Federungszylinders des hydropneumatischen Federungssystems verbindbaren und mit einem Kolbenraumdruck beaufschlagbaren Kolbenraumanschluss, einen mit dem Ringraum des Federungszylinders des hydropneumatischen Federungssystems verbindbaren und mit einem Ringraumdruck beaufschlagbaren Ringraumanschluss und mindestens eine steuerbare, mehrere Schaltstellungen umfassende Ventileinrichtung aufweist, über die der Druckversorgungsanschluss und der Rücklaufanschluss mit dem Kolbenraumanschluss und dem Ringraumanschluss verbindbar sind, wobei der Ringraumanschluss über eine erste Druckbegrenzungsleitung mit dem Rücklaufanschluss in Strömungsverbindung steht und in die erste Druckbegrenzungsleitung ein hydraulisch steuerbares Druckbegrenzungsglied geschaltet ist mit einem Steuereingang, der über eine Steuerleitung mit einem dem Kolbenraumdruck entsprechenden Steuerdruck beaufschlagbar ist.

Außerdem betrifft die Erfindung ein hydropneumatisches Federungssystem mit einer derartigen Steueranordnung.

Hydropneumatische Federungssysteme kommen insbesondere in Fahrzeugen mit veränderlichen Lastverhältnissen zum Einsatz, beispielsweise in Traktoren mit Aufnahmemitteln für Anbaugeräte. Mindestens ein Federungszylinder ist zwischen gefederten und ungefederten Massen des Fahrzeuges angeordnet. Er umfasst einen Kolbenraum, der mit einem ersten Hydrospeicher verbunden ist und mit unter Druck stehender Hydraulikflüssigkeit beaufschlagt werden kann und der die Federungslast trägt. Der mindestens eine Federungszylinder umfasst häufig außerdem einen Ringraum, der die Kolbenstange des Federungszylinders abgedichtet umgibt.

Bei zunehmender Federungslast wird Hydraulikflüssigkeit aus dem Kolbenraum in den ersten Hydrospeicher gedrückt, so dass sich die Relativlage der gefederten und ungefederten Massen verändert. Die Veränderung der Relativlage wird von Sensoren erfasst, die mit einer elektrischen Steuereinheit verbunden sind. Die elektrische Steuereinheit steuert mindestens eine Ventileinrichtung derart, dass diese ihre Schaltstellung ändert und den Kolbenraum mit dem Druckversorgungsanschluss verbindet, so dass dem Kolbenraum so lange Hydraulikflüssigkeit zugeführt wird, bis eine vorgebbare Relativlage wieder erreicht ist. Bei abnehmender Federungslast fließt Hydraulikflüssigkeit aus dem ersten Hydrospeicher in den Kolbenraum, so dass sich die Relativlage der gefederten und ungefederten Massen erneut verändert. Die Veränderung der Relativlage wird wieder erfasst, so dass die Ventileinrichtung erneut ihre Schaltstellung ändert und den Kolbenraum mit dem Rücklaufanschluss verbindet. Hydraulikflüssigkeit kann dann aus dem Kolbenraum herausströmen, bis das vorgegebene Niveau wieder hergestellt ist.

Derartige Federungssysteme kommen insbesondere in Vorderachsenfederungen von landwirtschaftlichen Traktoren zum Einsatz. Bei Arbeiten mit einem Anbaupflug wird die Hinterachse des Traktors stark belastet und die Vorderachse wird stark entlastet. Umgekehrte Lastverhältnisse liegen bei Arbeiten mit einem Frontlader vor. Die landwirtschaftlichen Traktoren werden somit bei sehr unterschiedlichen Betriebsbedingungen mit sehr unterschiedlichen Vorderachslasten betrieben. Dem Fachmann ist bekannt, dass hydropneumatische Federungssysteme die Eigenschaft aufweisen, sich mit zunehmender Last überproportional zu versteifen. Dies ist den Federungseigenschaften nicht immer zuträglich. Es wird daher häufig über eine Vorspannung des Federungssystems versucht, dieser Eigenschaft entgegenzuwirken. Die Vorspannung hat außerdem den Vorteil, dass auch bei stark variierender Federungslast der zulässige Arbeitsbereich des Hydrospeichers nicht überschritten wird.

Zur Vorspannung wird häufig zusätzlich zum Kolbenraum auch der Ringraum des mindestens einen Federungszylinders mit unter Druck stehender Hydraulikflüssigkeit beaufschlagt, wobei der Ringraum mit einem zweiten Hydrospeicher verbunden ist. Hierbei sind Federungssysteme bekannt, bei denen der Ringraum mit einem konstanten Druck beaufschlagt wird und somit das Federungssystem einer konstanten Vorspannung unterliegt. Häufig ist es allerdings sinnvoll, insbesondere bei niedrigen Vorderachslasten die Vorspannung anzuheben und damit die Federung zu verhärten. Dies hat seinen Grund darin, dass niedrige Vorderachslasten bei Traktoren durch schwere Anbaugeräte im Heck, beispielsweise durch einen schweren Anbaupflug, verursacht werden, die auch das Massenträgheitsmoment um die Traktorquerachse stark erhöhen. Dadurch kommt es beim Überfahren von Bodenunebenheiten zu starken Schwingungen um die Traktorquerachse. Diese Schwingungen werden üblicherweise als "Nickschwingungen" bezeichnet. Die Nickschwingungen können die Federung zum Durchschlagen bringen. Im Falle einer konstanten Vorspannung muss daher Letztere so hoch gewählt werden, dass ein Durchschlagen selbst bei niedrigen Achslasten nicht auftreten kann. Dies hat jedoch den Nachteil, dass bei unbeladenem Traktor die Federung sehr hart ist und deshalb nur einen eingeschränkten Fahrkomfort bietet.

Es sind auch Federungssysteme mit variablem Ringraumdruck bekannt. Diese umgehen den voranstehend genannten Nachteil, indem sie für den Traktor mit schwerem Heckanbaugerät und niedriger Vorderachslast einen hohen Ringraumdruck einstellen und damit die Federung verhärten, wohingegen sie für einen leeren Traktor mit mittlerer Vorderachslast einen niedrigen Ringraumdruck einstellen und damit die Federung weniger stark vorspannen und somit weicher machen. Federungssysteme mit variablem Ringraumdruck ermöglichen somit einen verbesserten Fahrkomfort. Derartige Federungssysteme sind in der US 6,578,855 B2 beschrieben. In dieser Veröffentlichung wird vorgeschlagen, den Ringraumdruck umgekehrt proportional zum Kolbenraumdruck zu steuern, so dass der Ringraumdruck umso geringer ist, je höher der Kolbenraumdruck ist. Bei sehr hohen Kolbenraumdrücken ist somit der Ringraumdruck sehr gering. Dies beeinträchtigt nicht nur die Federungseigenschaften des Federungssystems sondern auch den mit dem Ringraum verbundenen Hydrospeicher.

In der DE 197 19 076 A1 wird eine Steueranordnung der eingangs genannten Art offenbart. Bei dieser Steueranordnung ist der Ringraum über eine Druckbegrenzungsleitung mit dem Vorratstank des hydropneumatischen Federungssystems verbunden, und in die Druckbegrenzungsleitung ist ein Drei-Wege-Druckregelventil geschaltet, dessen Regelfeder sich an einem Positionierkolben abstützt. Der Positionierkolben ist als Stufenkolben ausgestaltet, der in einem Gehäuse verschiebbar ist. Er kann auf einer Seite mit der Federkraft einer Positionierfeder und auf der anderen Seite mit einem Steuerdruck beaufschlagt werden, der dem im Kolbenraum herrschenden Druck entspricht. Mittels eines verstellbaren Anschlages kann die Beweglichkeit des Positionierkolbens eingeschränkt werden. Eine derartige Ausgestaltung der Steueranordnung gibt die Möglichkeit, den Ringraumdruck nur bei relativ geringen Kolbenraumdrücken umgekehrt proportional zum Kolbenraumdruck zu steuern, wohingegen bei großen Kolbenraumdrücken der Ringraumdruck einen konstanten Wert einnimmt, da bei derartigen Druckverhältnissen der Positionierkolben am Anschlag zur Anlage gelangt und daher der Ringraumdruck vom Druckregelventil nicht weiter abgesenkt werden kann. Für die Federungseigenschaften des Federungssystems ist ein derartiges Verhalten des Ringraumdruckes von Vorteil. Nachteilig sind allerdings der hohe Komponentenaufwand und die komplexe Ansteuerung sowie die Störungsanfälligkeit derartiger Steueranordnungen, für die keine Standardkomponenten zum Einsatz kommen können, so dass die Herstellung derartiger Steueranordnungen mit erheblichen Kosten verbunden ist.

Eine weitere relevante, gemäß dem Oberbegriff des Anspruchs 1, Steueranordung für ein hydropneumatisches Federungssystem ist aus der EP 1232883 A2 bekannt.

Aufgabe der vorliegenden Erfindung ist es daher, eine Steueranordnung und ein hydropneumatisches Federungssystem mit einer derartigen Steueranordnung bereitzustellen, die mit möglichst geringem Aufwand, geringer Komplexität und geringen Herstellungskosten unter Einsatz von Standardkomponenten eine variable Ringraumdruckeinstellung ermöglichen.

Diese Aufgabe wird bei einer Steueranordnung der gattungsgemäßen Art erfindungsgemäß dadurch gelöst, dass der Steuerdruck auf einen vorgebbaren Grenzdruck begrenzbar ist.

Die Einstellung des Ringraumdruckes erfolgt bei der erfindungsgemäßen Steueranordnung in Abhängigkeit von dem im Kolbenraum herrschenden Druck. Ist der im Kolbenraum herrschende Druck größer als ein bestimmter Kolbenraumgrenzdruck, der günstigerweise einstellbar ist, so wird der im Ringraum herrschende Druck auf einen praktisch konstanten Wert eingestellt. Sinkt der Kolbenraumdruck unter den Kolbenraumgrenzdruck, so wird der Ringraumdruck umso höher eingestellt, je weiter der Kolbenraumdruck unter den Kolbenraumgrenzdruck absinkt. Der Kolbenraumgrenzdruck entspricht idealerweise dem im Kolbenraum herrschenden Druck bei einer Federungslast, die bei unbeladenem Traktor vorliegt. Der bei abnehmendem Kolbenraumdruck zunehmende Ringraumdruck sorgt bei geringen Federungslasten für einen Anstieg der Federrate des Federungssystems. Im Bereich unterhalb der bei unbelastetem Traktor vorliegenden Federungslast und damit im Bereich verhältnismäßig geringer Vorderachslasten, wie sie bei Traktoren mit schweren Heckanbaugeräten vorliegen, wirkt die zunehmende Federrate möglichen Nickschwingungen entgegen.

Bei der erfindungsgemäßen Steueranordnung ist der Steuereingang des hydraulisch steuerbaren Druckbegrenzungsglieds, das in eine den Ringraumanschluss mit dem Rücklaufanschluss verbindende Druckbegrenzungsleitung geschaltet ist, mit einem dem Kolbenraumdruck entsprechenden Steuerdruck beaufschlagbar, wobei der Steuerdruck auf einen vorgegebenen Grenzwert begrenzbar ist. Der am Steuereingang des Druckbegrenzungsgliedes anliegende Steuerdruck steuert das Druckbegrenzungsglied derart, dass der begrenzte Druck umso geringer ist, je höher der Steuerdruck ist. Bei der erfindungsgemäßen Steueranordnung wird somit der am Steuereingang des Druckbegrenzungsgliedes anliegende Steuerdruck auf einen vorgebbaren Grenzwert begrenzt. Bei Kolbenraumdrücken oberhalb des Kolbenraumgrenzdruckes nimmt der am Steuereingang des Druckbegrenzungsgliedes anliegende und dem Kolbenraumdruck entsprechende hydraulische Steuerdruck nur den vorgebbaren Grenzwert an und kann nicht weiter erhöht werden. Somit nimmt auch der Ringraumdruck bei Kolbenraumdrücken oberhalb des Kolbenraumgrenzdruckes einen gleich bleibenden Wert an. Bei Kolbenraumdrücken unterhalb des Kolbenraumgrenzdruckes folgt der am Steuereingang des Druckbegrenzungsgliedes anliegende Steuerdruck dem Verhalten des Kolbenraumdruckes, d. h. der Steuerdruck ist identisch oder zumindest proportional zum Kolbenraumdruck. Je weiter der Kolbenraumdruck unter den Kolbenraumgrenzwert absinkt, desto geringer ist auch der am Steuereingang des Druckbegrenzungsgliedes anliegende Steuerdruck. Dies hat zur Folge, dass der Ringraumdruck bei Kolbenraumdrücken unterhalb des Kolbenraumgrenzdruckes umso höhere Werte einnimmt, je weiter der Kolbenraumdruck unter den Kolbenraumgrenzdruck absinkt.

Das hydraulisch steuerbare Druckbegrenzungsglied ist vorzugsweise als hydraulisch steuerbares Druckbegrenzungsventil ausgestaltet. Alternativ kann vorgesehen sein, dass das Druckbegrenzungsglied als hydraulisch steuerbares Druckregelventil ausgebildet ist. Das hydraulisch steuerbare Druckbegrenzungsventil weist einen Steuereingang auf, an dem ein Steuerdruck anliegt. Der Steuerdruck wirkt belastend auf eine Feder des Druckbegrenzungsventils. Derartige Ventile sind dem Fachmann auch unter der Bezeichnung "Senkbremsventil" bekannt.

Besonders günstig ist es, wenn die Rückstellkraft der Feder des hydraulisch steuerbaren Druckbegrenzungsglieds einstellbar ist.

Von Vorteil ist es, wenn der Kolbenraumanschluss über die Steuerleitung mit dem Steuereingang des hydraulisch steuerbaren Druckbegrenzungsglieds in Strömungsverbindung steht, wobei die Strömungsrate der durch die Steuerleitung strömenden Hydraulikflüssigkeit begrenzbar ist. Dadurch kann der Abfluss von Hydraulikflüssigkeit vom Kolbenraumanschluss zum Steuereingang des hydraulisch steuerbaren Druckbegrenzungsglieds begrenzt werden.

Bei einer vorteilhaften Ausführungsform ist in die Steuerleitung ein Strömungswiderstand geschaltet, beispielsweise eine Drossel oder eine Blende. Durch Einsatz eines Strömungswiderstands kann der Volumenstrom auf einfache Weise begrenzt werden, der über die Steuerleitung abfließt.

Zur Begrenzung des Steuerdruckes auf einen vorgebbaren Grenzwert steht die Steuerleitung bei einer bevorzugten Ausführungsform der erfindungsgemäßen Steueranordnung über eine zweite Druckbegrenzungsleitung mit dem Rücklaufanschluss in Strömungsverbindung, wobei in die zweite Druckbegrenzungsleitung ein weiteres Druckbegrenzungsglied geschaltet ist. Dem in die Druckbegrenzungsleitung geschalteten hydraulisch steuerbaren Druckbegrenzungsglied ist somit ein weiteres Druckbegrenzungsglied zugeordnet, das in eine von der Steuerleitung abzweigende zweite Druckbegrenzungsleitung geschaltet ist. Das weitere Druckbegrenzungsglied ermöglicht es auf einfache Weise, den am Steuereingang des hydraulisch steuerbaren Druckbegrenzungsgliedes anliegenden Steuerdruck auf einen vorgebbaren Grenzwert zu beschränken.

Das weitere Druckbegrenzungsglied ist vorzugsweise als Druckbegrenzungsventil ausgestaltet.

Günstigerweise ist der Öffnungsdruck des weiteren Druckbegrenzungsglieds beispielsweise über eine Feder einstellbar. Durch Verstellen des Öffnungsdrucks des weiteren Druckbegrenzungsglieds kann somit der Grenzwert des Steuerdrucks verändert werden.

Alternativ zum Einsatz eines weiteren Druckbegrenzungsglieds ist bei einer vorteilhaften Ausführungsform der erfindungsgemäßen Steueranordnung vorgesehen, dass die Steuerleitung über eine Verbindungsleitung mit der ersten Druckbegrenzungsleitung in Strömungsverbindung steht, wobei die Verbindungsleitung auf der Hochdruckseite des hydraulisch steuerbaren Druckbegrenzungsgliedes in die erste Druckbegrenzungsleitung einmündet. Bei einer derartigen Ausgestaltung wird der am Steuereingang des hydraulisch steuerbaren Druckbegrenzungsgliedes anliegende Steuerdruck auf das auf der Hochdruckseite des Druckbegrenzungsgliedes in der ersten Druckbegrenzungsleitung herrschende Druckniveau begrenzt. Der Steuerdruck wird somit automatisch auf den höchsten Ringraumdruck begrenzt. Ist das hydraulisch steuerbare Druckbegrenzungsglied als hydraulisch steuerbares Druckbegrenzungsventil ausgebildet, so werden sowohl die Wirkfläche des Steuerdruckes als auch die Wirkfläche des zu begrenzenden Druckes mit dem Ringraumdruck beaufschlagt und der Steuerdruck sowie der Ringraumdruck wirken gegen die Feder des hydraulisch steuerbaren Druckbegrenzungsventils.

In die Verbindungsleitung, über die die Steuerleitung mit der ersten Druckbegrenzungsleitung in Strömungsverbindung steht, ist bevorzugt ein Rückschlagventil geschaltet, das in Richtung der ersten Druckbegrenzungsleitung öffnet. Das Rückschlagventil gibt die Strömungsverbindung von der Steuerleitung zur ersten Druckbegrenzungsleitung frei, wenn der in der Steuerleitung herrschende Druck größer ist als der Druck, der in der ersten Druckbegrenzungsleitung auf der Hochdruckseite des hydraulisch steuerbaren Druckbegrenzungsgliedes herrscht.

Die Erfindung betrifft auch ein hydropneumatisches Federungssystem insbesondere für Fahrzeuge. Das hydropneumatische Federungssystem umfasst eine Pumpe zur Druckerzeugung, einen Vorratstank für Hydraulikflüssigkeit und mindestens einen Federungszylinder, der einen die Federungslast tragenden, druckbeaufschlagten und mit einem ersten Hydrospeicher verbundenen Kolbenraum und einen eine Kolbenstange des Federungszylinders abgedichtet umgebenden, druckbeaufschlagten und mit einem zweiten Hydrospeicher verbundenen Ringraum aufweist. Außerdem umfasst das hydropneumatische Federungssystem eine Steueranordnung der voranstehend genannten Art, wobei der Kolbenraum mit dem Kolbenraumanschluss und der Ringraum mit dem Ringraumanschluss verbunden ist. Wie bereits erwähnt, zeichnet sich ein derartiges hydropneumatisches Federungssystem durch eine geringe Komplexität aus, wobei die Gefahr von Nickschwingungen gering gehalten werden kann. Das erfindungsgemäße Federungssystem hat außerdem den Vorteil, dass es kostengünstig hergestellt werden kann, wobei Standardkomponenten mit sehr geringer Störungsanfälligkeit zum Einsatz kommen können.

Die nachfolgende Beschreibung zweier bevorzugter Ausführungsformen der Erfindung dient im Zusammenhang mit der Zeichnung der näheren Erläuterung. Es zeigen:
- Figur 1:: einen Schaltplan eines erfindungsgemäßen hydropneumatischen Federungssystems mit einer ersten Ausführungsform einer erfindungsgemäßen Steueranordnung;
- Figur 2:: einen Schaltplan einer zweiten Ausführungsform einer erfindungsgemäßen Steueranordnung, die bei einem hydropneumatischen Federungssystem, wie es in Figur 1 dargestellt ist, zum Einsatz kommen kann;
- Figur 3:: eine schematische Darstellung des Verlaufes des in einem Ringraum eines Federungszylinders des hydropneumatischen Federungssystems aus Figur 1 herrschenden Ringraumdruckes in Abhängigkeit von dem im Kolbenraum des Federungszylinders herrschenden Druck, und
- Figur 4:: eine schematische Darstellung der Federrate des hydropneumatischen Federungssystems aus Figur 1 in Abhängigkeit von der Achslast eines Fahrzeuges, bei dem das hydropneumatische Federungssystem zum Einsatz kommt.

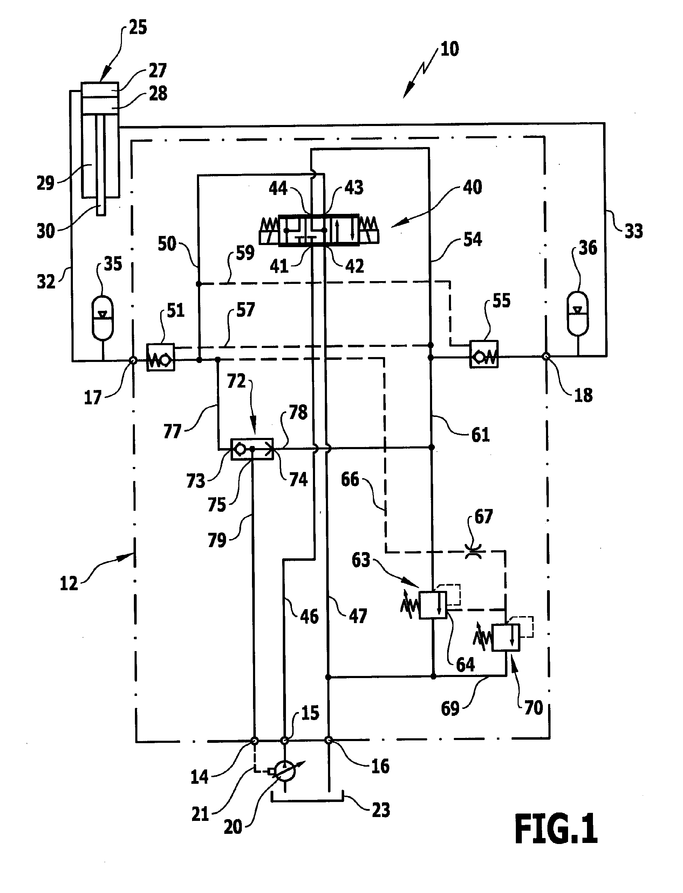

In Figur 1 ist schematisch ein insgesamt mit dem Bezugszeichen 10 belegtes hydropneumatisches Federungssystem gemäß einer vorteilhaften Ausführungsform der Erfindung dargestellt. Das Federungssystem 10 eignet sich insbesondere für den Einsatz in Fahrzeugen mit stark veränderlichen Lastverhältnissen, beispielsweise in Traktoren mit frontseitigen und heckseitigen Aufnahmemitteln für Anbaugeräte. Bei dem in Figur 1 dargestellten Federungssystem kommt eine erste Ausführungsform einer erfindungsgemäßen Steueranordnung zum Einsatz, die mit dem Bezugszeichen 12 belegt ist und einen Steueranschluss 14, einen Druckversorgungsanschluss 15, einen Rücklaufanschluss 16 sowie einen Kolbenraumanschluss 17 und einen Ringraumanschluss 18 aufweist. An den Druckversorgungsanschluss 15 ist eine Load-Sensing-Pumpe 20 angeschlossen, die über eine an den Steueranschluss 14 angeschlossene Pumpsteuerleitung 21 gesteuert wird. An den Rücklaufanschluss 16 ist ein Vorratstank 23 angeschlossen.

Zusätzlich zur Steueranordnung 12 weist das hydropneumatische Federungssystem bei der in Figur 1 dargestellten Ausgestaltung einen Federungszylinder 25 auf, der zwischen nicht näher dargestellten gefederten und ungefederten Massen eines Fahrzeuges, vorzugsweise eines Traktors, angeordnet ist. Das hydropneumatische Federungssystem 10 kann beispielsweise in einer Vorderachsenfederung eines Traktors verwendet werden, der Aufnahmemittel für frontseitige und heckseitige Anbaugeräte aufweist. Der Federungszylinder 25 umfasst einen Kolbenraum 27, der durch einen Kolben 28 von einem Ringraum 29 getrennt ist. Der Ringraum 29 umgibt eine Kolbenstange 30.

Der Kolbenraum 27 ist über eine erste Anschlussleitung 32 an den Kolbenraumauslass 17 angeschlossen, und der Ringraum 29 ist über eine zweite Anschlussleitung 33 an den Ringraumauslass 18 der Steueranordnung 12 angeschlossen. An die erste Anschlussleitung 32 ist ein erster Hydrospeicher 35 angeschlossen, und an die zweite Anschlussleitung 33 ist ein zweiter Hydrospeicher 36 angeschlossen.

Die Steueranordnung 12 weist eine steuerbare Ventileinrichtung 40 auf. In der dargestellten Ausführungsform ist die Ventileinrichtung 40 in Form eines federzentrierten und magnetbetätigten 4/3-Proportional-Wegeventils ausgebildet und umfasst einen Druckanschluss 41, einen Ablaufanschluss 42 sowie einen ersten Arbeitsanschluss 43 und einen zweiten Arbeitsanschluss 44. In der in Figur 1 dargestellten Ruhestellung der Ventileinrichtung 40 ist der Druckanschluss 41 gesperrt und die beiden Arbeitsanschlüsse 43, 44 sind mit dem Ablaufanschluss 42 verbunden. In einer ersten Arbeitsstellung ist der erste Arbeitsanschluss 43 mit dem Ablaufanschluss 42 und der zweite Arbeitsanschluss 44 mit dem Druckanschluss 41 verbunden. In einer zweiten Arbeitsstellung sind die beiden Arbeitsanschlüsse 43, 44 mit dem Druckanschluss 41 verbunden und der Ablaufanschluss 42 ist gesperrt.

Der Druckanschluss 41 steht über eine Druckleitung 46 mit dem Druckversorgungsanschluss 15 in Strömungsverbindung, und der Ablaufanschluss 42 steht über eine Ablaufleitung 47 mit dem Rücklaufanschluss 16 in Strömungsverbindung. Der erste Arbeitsanschluss 43 steht über eine erste Ausgangsleitung 50 mit dem Kolbenraumanschluss 17 in Strömungsverbindung. Zwischen dem Arbeitsanschluss 43 und dem Kolbenraumanschluss 17 ist in die erste Ausgangsleitung 50 ein erstes entsperrbares Rückschlagventil 51 geschaltet. Der zweite Arbeitsanschluss 44 steht über eine zweite Ausgangsleitung 54 mit dem Ringraumanschluss 18 in Strömungsverbindung. Zwischen dem Arbeitsanschluss 44 und dem Ringraumanschluss 18 ist in die zweite Ausgangsleitung 54 ein zweites entsperrbares Rückschlagventil 55 geschaltet. Das erste entsperrbare Rückschlagventil 51 öffnet in Richtung des Kolbenraumanschlusses 17 und kann über eine erste Ventilsteuerleitung 57 für einen Strom in Gegenrichtung entsperrt werden. Die erste Ventilsteuerleitung 57 zweigt zwischen dem zweiten entsperrbaren Rückschlagventil 55 und dem zweiten Arbeitsanschluss 44 von der zweiten Ausgangsleitung 54 ab. Das zweite entsperrbare Rückschlagventil 55 öffnet in Richtung des Ringraumanschlusses 18 und kann über eine zweite Ventilsteuerleitung 59 für einen Strom in Gegenrichtung entsperrt werden. Die zweite Ventilsteuerleitung 59 zweigt zwischen dem ersten entsperrbaren Rückschlagventil 51 und dem ersten Arbeitsanschluss 43 von der ersten Ausgangsleitung 50 ab.

Im Bereich zwischen dem zweiten Arbeitsanschluss 44 und dem zweiten entsperrbaren Rückschlagventil 55 zweigt von der zweiten Ausgangsleitung 54 eine erste Druckbegrenzungsleitung 61 ab, die in die Ablaufleitung 47 einmündet und über die Ablaufleitung 47 eine Strömungsverbindung ermöglicht zwischen der zweiten Ausgangsleitung 54 und dem Rücklaufanschluss 16. In die erste Druckbegrenzungsleitung 61 ist ein hydraulisch steuerbares Druckbegrenzungsglied geschaltet, das in Form eines hydraulisch steuerbaren Druckbegrenzungsventils 63 ausgestaltet ist. Ein Steuereingang 64 des Druckbegrenzungsventils 63 steht über eine Steuerleitung 66 mit der ersten Ausgangsleitung 50 in Strömungsverbindung, von der die Steuerleitung 66 im Bereich zwischen dem ersten entsperrbaren Rückschlagventil 51 und dem ersten Arbeitsanschluss 43 abzweigt. In die Steuerleitung 66 ist ein Strömungswiderstand in Form eines Drosselelements 67 geschaltet, und im Bereich zwischen dem Drosselelement 67 und dem Steuereingang 64 zweigt von der Steuerleitung 66 eine zweite Druckbegrenzungsleitung 69 ab, in die ein weiteres Druckbegrenzungsventil 70 geschaltet ist und die auf der Niederdruckseite des hydraulisch steuerbaren Druckbegrenzungsventils 63 in die erste Druckbegrenzungsleitung 61 einmündet und somit mit dem Rücklaufanschluss 16 in Strömungsverbindung steht. Der Öffnungsdruck des weiteren Druckbegrenzungsventils 70 ist über eine Feder einstellbar.

Die Steueranordnung 12 umfasst außerdem ein Wechselventil 72 mit einem ersten Anschluss 73, einem zweiten Anschluss 74 und einem dritten Anschluss 75. Der erste Anschluss 73 steht über eine erste Leitung 77 mit der ersten Ausgangsleitung 50 in Strömungsverbindung, in die die erste Leitung 77 im Bereich zwischen dem ersten steuerbaren Rückschlagventil 51 und dem ersten Arbeitsanschluss 43 einmündet. Der zweite Anschluss 74 steht über eine zweite Leitung 78 mit der ersten Druckbegrenzungsleitung 61 in Strömungsverbindung, in die die zweite Leitung 78 auf der Hochdruckseite des hydraulisch steuerbaren Druckbegrenzungsventils 63 einmündet. Der dritte Anschluss 75 ist über eine dritte Leitung 79 mit dem Steueranschluss 14 der Steueranordnung 12 verbunden.

Ausgehend von seiner in Figur 1 dargestellten Ruhestellung kann die Ventileinrichtung 40 wahlweise in die erste Arbeitsstellung oder in die zweite Arbeitsstellung übergehen. Der Übergang erfolgt im dargestellten Ausführungsbeispiel in Abhängigkeit von der Relativlage der gefederten und ungefederten Massen des Fahrzeuges, also beispielsweise des Traktors, und wird von einer an sich bekannten und deshalb zur Erzielung einer besseren Übersicht in der Zeichnung nicht dargestellten elektrischen Steuereinheit gesteuert, die mit die Relativlage der gefederten und ungefederten Massen erfassenden Sensoren in elektrischer Verbindung steht. Die Änderung der Relativlage der gefederten und ungefederten Massen beispielsweise aufgrund einer Änderung der gefederten Massen hat eine Änderung der Volumina des Kolbenraums 27 und des Ringraums 29 zur Folge, so dass sich die Niveaulage des Fahrzeuges ändert. Zum Ausgleich können der Kolbenraum 27 und der Ringraum 29 in Abhängigkeit von der Schaltstellung der Ventileinrichtung 40 mit Druck beaufschlagt werden. Der Einsatz des hydraulisch steuerbaren Druckbegrenzungsventils 63 und des weiteren Druckbegrenzungsventils 70 hat allerdings zur Folge, dass der Ringraum 29 bei Kolbenraumdrücken oberhalb eines bestimmten Kolbenraumgrenzdruckes mit einem praktisch konstanten Druck beaufschlagt wird. Der Kolbenraumgrenzdruck ist durch die Stellung der Feder des weiteren Druckbegrenzungsventils 70 einstellbar. Sinkt der im Kolbenraum 27 herrschende Kolbenraumdruck unter den eingestellten Kolbenraumgrenzdruck, so nimmt der im Ringraum 29 herrschende Ringraumdruck umso höhere Werte an, je weiter der Kolbenraumdruck unter den Kolbenraumgrenzdruck fällt.

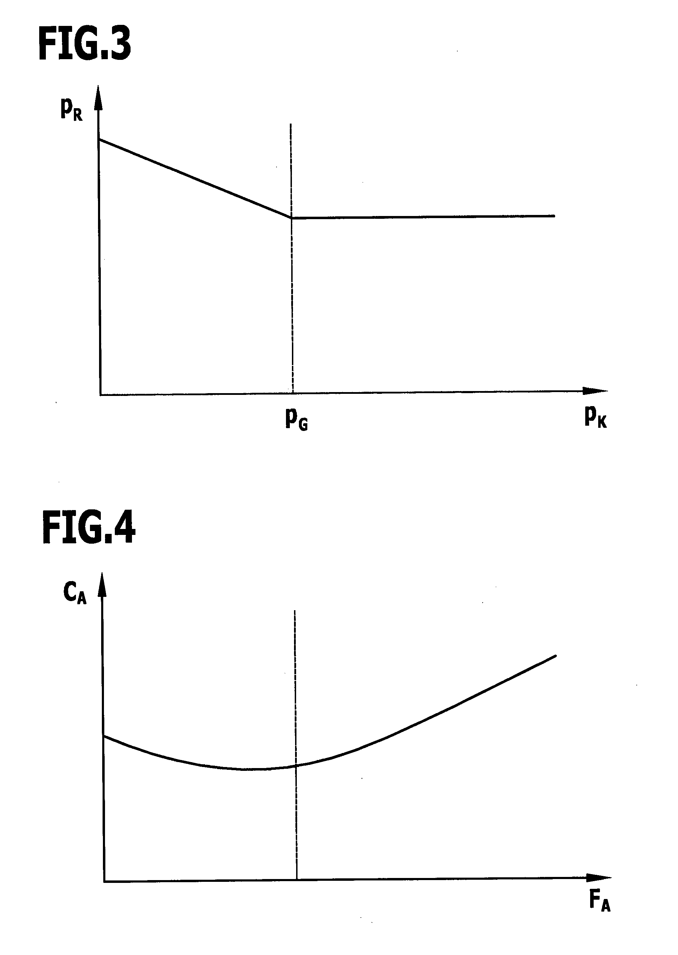

Der Verlauf des Ringraumdruckes p_{R} in Abhängigkeit vom Kolbenraumdruck p_{K} ist in Figur 3 schematisch dargestellt. Die dargestellte Abhängigkeit des Ringraumdruckes p_{R} vom Kolbenraumdruck p_{K} wird durch Einsatz des hydraulisch steuerbaren Druckbegrenzungsventils 63 erzielt, dessen Steuereingang 64 mit dem Kolbenraumdruck p_{K} beaufschlagt wird. Der am Steuereingang 64 herrschende Kolbenraumdruck p_{K} wirkt belastend auf die Feder des hydraulisch steuerbaren Druckbegrenzungsventils 63. Derartige Ventile werden auch als sogenannte "Senkbremsventile" bezeichnet. Dadurch ist der Ringraumdruck p_{R} umso geringer, je höher der am Steuereingang 64 anliegende Kolbenraumdruck p_{K} ist. Dieses Verhalten des Ringraumdruckes p_{R} erfolgt jedoch nur bei Kolbenraumdrücken unterhalb des Kolbenraumgrenzdruckes p_{G}, denn bei Kolbenraumdrücken oberhalb des Kolbenraumgrenzdruckes p_{G} kommt das weitere Druckbegrenzungsventil 70 zur Wirkung, das den am Steuereingang 64 anliegenden Kolberaumdruck p_{K} auf den Kolbenraumgrenzdruck p_{G} begrenzt.

Somit liegt bei Kolbenraumdrücken oberhalb des Kolbenraumgrenzdruckes p_{G} am Steuereingang 64 des hydraulisch steuerbaren Druckbegrenzungsventils 63 ein konstanter Steuerdruck an und der Ringraumdruck p_{R} nimmt einen gleichbleibenden Wert an. Dies ist in Figur 3 unmittelbar erkennbar.

Wie bereits erläutert, ist in die Steuerleitung 66 das Drosselelement 67 geschaltet, das beispielsweise in Form einer Blende ausgestaltet sein kann. Der Einsatz des Drosselelementes 67 begrenzt den Volumenstrom, der über die Steuerleitung 66 von der ersten Ausgangsleitung 50 abfließt. Zudem kann durch den Einsatz des Drosselelements 67 die Durchflussanforderung an das weitere Druckbegrenzungsventil 70 gering gehalten und dessen Baugröße klein gewählt werden.

Die Federrate c_{A} des hydropneumatischen Federungssystems 10 zeigt den in Figur 4 schematisch dargestellten Verlauf in Abhängigkeit von der Achslast F_{A}. Der bei abnehmendem Kolbenraumdruck p_{K} zunehmende Ringraumdruck p_{R} sorgt bei geringen Federungslasten F_{A} für eine höhere Federrate c_{A} als dies bei einem konstanten Ringraumdruck p_{R} der Fall wäre. Ein derartiger Verlauf der Federrate c_{A} wirkt bei geringen Achslasten F_{A} möglichen Nickschwingungen entgegen, die durch schwere Anbaugeräte im Heck des Traktors verursacht werden können.

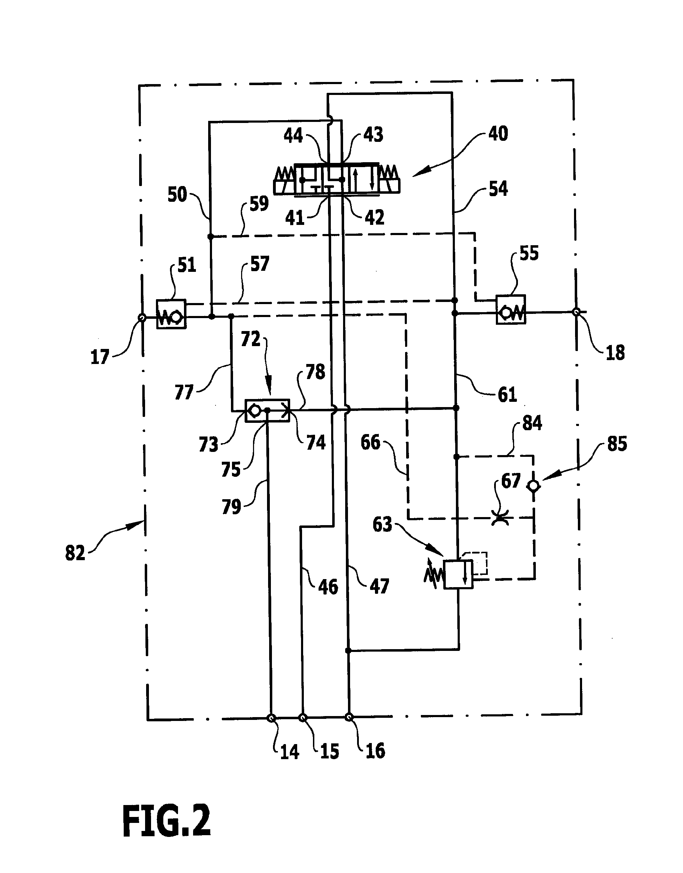

In Figur 2 ist eine zweite Ausführungsform einer erfindungsgemäßen Steueranordnung dargestellt, die insgesamt mit dem Bezugszeichen 82 belegt ist. Die Steueranordnung 82 kann alternativ zur voranstehend erläuterten Steueranordnung 12 bei dem hydropneumatischen Federungssystem 10 zum Einsatz kommen. Die Steueranordnung 82 ist weitgehend identisch ausgebildet wie die Steueranordnung 12. Für identische Bauteile werden in Figur 2 dieselben Bezugszeichen verwendet wie in Figur 1 und zur Vermeidung von Wiederholungen wird bezüglich dieser Bauteile auf die voranstehenden Erläuterungen verwiesen.

Die Steueranordnung 82 unterscheidet sich von der Steueranordnung 12 dadurch, dass im Bereich zwischen dem Drosselelement 67 und dem Steuereingang 64 des hydraulisch steuerbaren Druckbegrenzungsventils 63 von der Steuerleitung 66 eine Verbindungsleitung 84 abzweigt, in die ein Rückschlagventil 85 geschaltet ist und die auf der Hochdruckseite des steuerbaren Druckbegrenzungsventils 63 in die erste Druckbegrenzungsleitung 61 einmündet. Das weitere Druckbegrenzungsventil 70 sowie die zweite Druckbegrenzungsleitung 69 entfallen bei der in Figur 2 dargestellten Steueranordnung 82. Das Rückschlagventil 85 öffnet in Richtung der ersten Druckbegrenzungsleitung 61 und sperrt in Gegenrichtung. Dadurch wird der am Steuereingang 64 des hydraulisch steuerbaren Druckbegrenzungsventils 63 anliegende Steuerdruck auf den stromaufwärts des Druckbegrenzungsventils 63 in der ersten Druckbegrenzungsleitung 61 herrschenden Ringraumdruck begrenzt. Übersteigt der Steuerdruck den in der ersten Druckbegrenzungsleitung 61 herrschenden Ringraumdruck, so wirkt das hydraulisch steuerbare Druckbegrenzungsventil 63 als handelsübliches Druckbegrenzungsventil, wobei sowohl der zu begrenzende Druck als auch der am Steuereingang 64 anliegende Steuerdruck gegen die Feder des ersten Druckbegrenzungsventils 63 arbeiten.

Auch bei der in Figur 2 dargestellten Steueranordnung 82 weist der Ringraumdruck p_{R} den in Figur 3 dargestellten Verlauf in Abhängigkeit vom Kolbenraumdruck p_{K} auf. Wiederum nimmt der Ringraumdruck in Bereichen, in denen der Kolbenraumdruck p_{K} größer als der Kolbenraumgrenzdruck p_{G} ist, einen gleichbleibenden Wert an, wohingegen er umso höhere Werte einnimmt, je weiter der Kolbenraumdruck p_{K} unter den Kolbenraumgrenzdruck p_{G} abfällt. Die Federrate c_{A} des hydropneumatischen Federungssystems zeigt auch bei Einsatz der Steueranordnung 82 den in Figur 4 schematisch dargestellten Verlauf in Abhängigkeit von der Achslast F_{A}. Bei geringen Achslasten F_{A} erhöht sich der Federrate c_{A}. Wie bereits erwähnt, wirkt dies Nickschwingungen um die Traktorquerachse bei Einsatz schwerer Anbaugeräte am Heck des Traktors entgegen.

## Patentansprüche

1. Steueranordnung für ein hydropneumatisches Federungssystem, wobei die Steueranordnung (12) einen Druckversorgungsanschluss (15) zum Anschließen an eine Druckversorgung, einen Rücklaufanschluss (16), einen mit dem Kolbenraum (27) eines Federungszylinders (25) des hydropneumatischen Federungssystems (10) verbindbaren und mit einem Kolbenraumdruck beaufschlagbaren Kolbenraumanschluss (17), einen mit dem Ringraum (29) des Federungszylinders (25) des hydropneumatischen Federungssystems (10) verbindbaren und mit einem Ringraumdruck beaufschlagbaren Ringraumanschluss (18) und mindestens eine steuerbare, mehrere Schaltstellungen umfassende Ventileinrichtung (40) aufweist, über die der Druckversorgungsanschluss (15) und der Rücklaufanschluss (16) mit dem Kolbenraumanschluss (17) und dem Ringraumanschluss (18) verbindbar sind, wobei der Ringraumanschluss (18) über eine erste Druckbegrenzungsleitung (61) mit dem Rücklaufanschluss (16) in Strömungsverbindung steht und in die erste Druckbegrenzungsleitung (61) ein hydraulisch steuerbares Druckbegrenzungsglied geschaltet ist mit einem Steuereingang (64), der über eine Steuerleitung (66) mit einem dem Kolbenraumdruck entsprechenden Steuerdruck beaufschlagbar ist, **dadurch gekennzeichnet, dass** der Steuerdruck auf einen vorgebbaren Grenzdruck begrenzbar ist.

2. Steueranordnung nach Anspruch 1, **dadurch gekennzeichnet, dass** das Druckbegrenzungsglied als hydraulisch steuerbares Druckbegrenzungsventil (63) oder als hydraulisch steuerbares Druckregelventil ausgestaltet ist.

3. Steueranordnung nach Anspruch 1 oder 2, **dadurch gekennzeichnet, dass** der Kolbenraumanschluss (17) über die Steuerleitung (66) mit dem Steuereingang (64) des hydraulisch steuerbaren Druckbegrenzungsglieds in Strömungsverbindung steht, wobei die Strömungsrate der durch die Steuerleitung (16) strömenden Hydraulikflüssigkeit begrenzbar ist.

4. Steueranordnung nach Anspruch 1, 2 oder 3, **dadurch gekennzeichnet, dass** in die Steuerleitung (66) ein Strömungswiderstand, insbesondere ein Drosselelement (67) geschaltet ist.

5. Steueranordnung nach einem der voranstehenden Ansprüche, **dadurch gekennzeichnet, dass** die Steuerleitung (66) über eine zweite Druckbegrenzungsleitung (69) mit dem Rücklaufanschluss (16) in Strömungsverbindung steht, wobei in die zweite Druckbegrenzungsleitung (69) ein weiteres Druckbegrenzungsglied geschaltet ist.

6. Steueranordnung nach Anspruch 5, **dadurch gekennzeichnet, dass** das weitere Druckbegrenzungsglied als Druckbegrenzungsventil (70) ausgestaltet ist.

7. Steueranordnung nach Anspruch 5 oder 6, **dadurch gekennzeichnet, dass** der Öffnungsdruck des weiteren Druckbegrenzungsglieds (70) einstellbar ist.

8. Steueranordnung nach einem der Ansprüche 1 bis 4, **dadurch gekennzeichnet, dass** die Steuerleitung (66) über eine Verbindungsleitung (84) mit der ersten Druckbegrenzungsleitung (61) in Strömungsverbindung steht, wobei die Verbindungsleitung (84) auf der Hochdruckseite des hydraulisch steuerbaren Druckbegrenzungsgliedes in die erste Druckbegrenzungsleitung (61) mündet.

9. Steueranordnung nach Anspruch 8, **dadurch gekennzeichnet, dass** in die Verbindungsleitung (84) ein Rückschlagventil (85) geschaltet ist, das in Richtung der ersten Druckbegrenzungsleitung (61) öffnet.

10. Hydropneumatisches Federungssystem mit einer Pumpe (20) zur Druckerzeugung, einem Vorratstank (23) für Hydraulikflüssigkeit und mindestens einem Federungszylinder (25), der einen die Federungslast tragenden, druckbeaufschlagten und mit einem ersten Hydrospeicher (35) verbundenen Kolbenraum (27) und einen eine Kolbenstange (30) des Federungszylinders (25) abgedichtet umgebenden, druckbeaufschlagten und mit einem zweiten Hydrospeicher (36) verbundenen Ringraum (29) aufweist, **dadurch gekennzeichnet, dass** das hydropneumatische Federungssystem (10) eine Steueranordnung (12; 82) nach einem der voranstehenden Ansprüche umfasst, wobei der Kolbenraum (27) mit dem Kolbenraumanschluss (17) und der Ringraum (29) mit dem Ringraumanschluss (18) in Strömungsverbindung steht.

## Claims

1. Control arrangement for a hydropneumatic suspension system, the control arrangement (12) comprising a pressure supply connection (15) for connecting to a pressure supply, a return connection (16), a piston chamber connection (17) that can be connected to the piston chamber (27) of a suspension cylinder (25) of the hydropneumatic suspension system (10) and that can be acted upon by a piston chamber pressure, an annular chamber connection (18) that can be connected to the annular chamber (29) of the suspension cylinder (25) of the hydropneumatic suspension system (10) and that can be acted upon by an annular chamber pressure, and at least one controllable valve device (40) that comprises a plurality of switching positions via which the pressure supply connection (15) and the return connection (16) can be connected to the piston chamber connection (17) and the annular chamber connection (18), the annular chamber connection (18) being in flow connection with the return connection (16) via a first pressure-limiting line (61), and a hydraulically controllable pressure-limiting element being provided in the first pressure-limiting line (61) and having a control input (64) that can be acted upon via a control line (66) by a control pressure that corresponds to the piston chamber pressure, **characterized in that** the control pressure can be limited to a predefinable pressure limit.

2. Control arrangement according to claim 1, **characterized in that** the pressure-limiting element is configured as a hydraulically controllable pressure-limiting valve (63) or as a hydraulically controllable pressure control valve.

3. Control arrangement according to claim 1 or claim 2, **characterized in that** the piston chamber connection (17) is in flow connection with the control input (64) of the hydraulically controllable pressure-limiting element via the control line (66), the flow rate of the hydraulic fluid flowing through the control line (16) being limitable.

4. Control arrangement according to claims 1, 2 or 3, **characterized in that** a flow resistance, in particular a throttle element (67), is provided in the control line (66).

5. Control arrangement according to any one of the preceding claims, **characterized in that** the control line (66) is in flow connection with the return connection (16) via a second pressure-limiting line (69), a further pressure-limiting element being provided in the second pressure-limiting line (69).

6. Control arrangement according to claim 5, **characterized in that** the further pressure-limiting element is configured as a pressure-limiting valve (70).

7. Control arrangement according to claim 5 or 6, **characterized in that** the opening pressure of the further pressure-limiting element (70) is adjustable.

8. Control arrangement according to any one of claims 1 to 4, **characterized in that** the control line (66) is in flow connection with the first pressure-limiting line (61) via a connecting line (84), the connecting line (84) ending in the first pressure-limiting line (61) on the high-pressure side of the hydraulically controllable pressure-limiting element.

9. Control arrangement according to claim 8, **characterized in that** a check valve (85) that opens in the direction toward the first pressure-limiting line (61) is provided in the connecting line (84).

10. Hydropneumatic suspension system, comprising a pump (20) for pressure generation, a reservoir (23) for hydraulic fluid and at least one suspension cylinder (25) that has a piston chamber (27) which carries the suspension load, is acted upon by pressure and is connected to a first hydraulic accumulator (35), and an annular chamber (29) that sealingly surrounds a piston rod (30) of the suspension cylinder (25), is acted upon by pressure and is connected to a second hydraulic accumulator (36), **characterized in that** the hydropneumatic suspension system (10) comprises a control arrangement (12; 82) according to any one of the preceding claims, the piston chamber (27) being in flow connection with the piston chamber connection (17), and the annular chamber (29) being in flow connection with the annular chamber connection (18).

## Revendications

1. Ensemble de commande pour un système de suspension hydropneumatique, l'ensemble de commande (12) comprenant un raccord d'alimentation en pression (15) permettant le raccordement à une alimentation en pression, un raccord de retour (16), un raccord de chambre de piston (17) pouvant être relié à la chambre de piston (27) d'un vérin de suspension (25) du système de suspension hydropneumatique (10) et pouvant être exposé à une pression de chambre de piston, un raccord de chambre annulaire (18) pouvant être relié à la chambre annulaire (29) du vérin de suspension (25) du système de suspension hydropneumatique (10) et pouvant être exposé à une pression de chambre annulaire, et au moins un ensemble soupape (40) pouvant être commandé et comprenant plusieurs positions de commutation par l'intermédiaire duquel le raccord d'alimentation en pression (15) et le raccord de retour (16) peuvent être reliés au raccord de chambre de piston (17) et au raccord de chambre annulaire (18), le raccord de chambre annulaire (18) étant en liaison fluidique avec le raccord de retour (16) par l'intermédiaire d'une première conduite de limitation de pression (61) et un élément de limitation de pression pouvant être commandé hydrauliquement étant monté dans la première conduite de limitation de pression (61), ledit élément de limitation de pression étant pourvu d'une entrée de commande (64), laquelle peut être exposée par l'intermédiaire d'une conduite de commande (66) à une pression de commande correspondant à la pression de chambre de piston, **caractérisé en ce que** la pression de commande peut être limitée à une pression limite pouvant être prédéfinie.

2. Ensemble de commande selon la revendication 1, **caractérisé en ce que** l'élément de limitation de pression est réalisé sous la forme d'une soupape de limitation de pression (63) pouvant être commandée hydrauliquement ou d'une soupape de régulation de pression pouvant être commandée hydrauliquement.

3. Ensemble de commande selon la revendication 1 ou 2, **caractérisé en ce que** le raccord de chambre de piston (17) est en liaison fluidique avec l'entrée de commande (64) de l'élément de limitation de pression pouvant être commandé hydrauliquement par l'intermédiaire de la conduite de commande (66), le débit du liquide hydraulique s'écoulant à travers la conduite de commande (16) pouvant être limité.

4. Ensemble de commande selon la revendication 1, 2 ou 3, **caractérisé en ce qu'**une résistance à l'écoulement, en particulier un élément d'étranglement (67), est montée dans la conduite de commande (66).

5. Ensemble de commande selon l'une quelconque des revendications précédentes, **caractérisé en ce que** la conduite de commande (66) est en liaison fluidique avec le raccord de retour (16) par l'intermédiaire d'une deuxième conduite de limitation de pression (69), un autre élément de limitation de pression étant monté dans la deuxième conduite de limitation de pression (69).

6. Ensemble de commande selon la revendication 5, **caractérisé en ce que** l'autre élément de limitation de pression est réalisé sous la forme d'une soupape de limitation de pression (70).

7. Ensemble de commande selon la revendication 5 ou 6, **caractérisé en ce que** la pression d'ouverture de l'autre élément de limitation de pression (70) est réglable.

8. Ensemble de commande selon l'une quelconque des revendications 1 à 4, **caractérisé en ce que** la conduite de commande (66) est en liaison fluidique avec la première conduite de limitation de pression (61) par l'intermédiaire d'une conduite de liaison (84), la conduite de liaison (84) débouchant, sur la face haute pression de l'élément de limitation de pression pouvant être commandé hydrauliquement, dans la première conduite de limitation de pression (61).

9. Ensemble de commande selon la revendication 8, **caractérisé en ce qu'**une soupape de retour (85), laquelle s'ouvre en direction de la première conduite de limitation de pression (61), est montée dans la conduite de liaison (84).

10. Système de suspension hydropneumatique pourvu d'une pompe (20) permettant la génération d'une pression, d'un réservoir de stockage (23) pour le liquide hydraulique et d'au moins un vérin de suspension (25), lequel comprend une chambre de piston (27) portant la charge de suspension, exposée à une pressée et reliée à un premier accumulateur hydraulique (35), et une chambre annulaire (29) entourant de manière étanche une tige de piston (30) du vérin de suspension (25), exposée à une pression et reliée à un deuxième accumulateur hydraulique (36), **caractérisé en ce que** le système de suspension hydropneumatique (10) comprend un ensemble de commande (12 ; 82) selon l'une quelconque des revendications précédentes, la chambre de piston (27) étant en liaison fluidique avec le raccord de chambre de piston (17) et la chambre annulaire (29) étant en liaison fluidique avec le raccord de chambre annulaire (18).
